# FASCICULE DE BREVET EUROPEEN

(11) **EP 3 847 417 B1**
(45) Date de publication et mention de la délivrance du brevet: **22.10.2025**
(21) Numéro de dépôt: 19735357.6
(22) Date de dépôt: 08.07.2019
(51) Int. Cl.: G01C 21/36, B60W 30/08, B60W 30/12, G06V 10/98, G06V 20/56

(54) **PROCÉDÉ DE DÉTECTION DE FAUX POSITIFS D'UN DISPOSITIF DE TRAITEMENT D'IMAGE D'UNE CAMÉRA**
VERFAHREN ZUR ERKENNUNG VON FALSCHEN POSITIVEN EINER BILDVERARBEITUNGSVORRICHTUNG EINER KAMERA
METHOD FOR DETECTING FALSE POSITIVES OF AN IMAGE-PROCESSING DEVICE OF A CAMERA

(30) Priorité: 06.09.2018 FR 1870996
(43) Date de publication de la demande: 14.07.2021
(73) Titulaire: Ampere SAS, 92100 Boulogne-Billancourt (FR); NISSAN MOTOR CO., LTD., Yokohama-shi, Kanagawa 221-0023 (JP)
(72) Inventeur: ROHRBACK, Thibault, 92100 Boulogne Billancourt (FR)
(74) Mandataire: Renault Group
(86) Numéro de dépôt international: PCT/EP2019/068261
(87) Numéro de publication internationale: WO 2020/048659

(56) Documents cités:
- EP-A2- 1 089 231
- US-A1- 2006 233 425
- US-B1- 9 063 548

## Description

L'invention concerne le domaine des véhicules équipés d'un système d'aide à la conduite.

L'invention porte sur un procédé de détection de faux positifs d'un dispositif de traitement d'image d'une caméra.

Il est connu de l'état de la technique des véhicules comprenant au moins une caméra comportant un dispositif de traitement d'image apte à fournir des données de modélisation d'une ligne de marquage d'une voie de circulation d'un véhicule.

Les dispositifs de traitement d'image de caméra de l'état de la technique ne sont pas toujours très fiables, notamment lorsque le véhicule circule sur une voie de circulation mal entretenue ou lorsque les détections de marquages sont ambigües. De fausses détections sur des lignes de marquage peuvent engendrer des corrections intempestives de trajectoire de véhicule. Cela réduit le confort des passagers du véhicule et peut occasionner une méfiance de l'utilisateur vis à vis les systèmes de conduite semi-autonomes ou autonomes.

Le but de cette invention est de proposer un procédé de détection de faux positifs d'un dispositif de traitement d'image de caméra permettant d'éviter les fausses détections positives et l'inconfort associé.

L'invention porte sur un procédé, selon la revendication 1, de détection de faux positifs d'un dispositif de traitement d'image d'une caméra embarquée sur un véhicule 1, ledit dispositif de traitement d'image étant apte à fournir des données de modélisation d'une ligne de marquage d'une voie de circulation du véhicule dans un référentiel fixe par rapport au véhicule, le procédé de détection de faux positif comprenant les étapes suivantes :
- une première étape de détermination, à partir des données de modélisation de la ligne de marquage, d'une première distance du véhicule à la ligne de marquage, à un premier instant dans le temps,
- une deuxième étape de détermination, à partir des données de modélisation de la ligne de marquage, d'une deuxième distance du véhicule à la ligne de marquage, à un deuxième instant dans le temps,
- une étape de calcul de discontinuité initiale dans laquelle une discontinuité initiale est calculée, la discontinuité initiale étant égale à la valeur absolue de la différence entre la première distance et la deuxième distance,
- une étape de détection de faux positif de discontinuité initiale, dans laquelle la discontinuité initiale est comparée à un seuil bas initial prédéterminé, un faux positif de discontinuité initiale étant détecté si la discontinuité initiale est supérieure au seuil bas initial.

Selon l'invention, le seuil bas initial est égal à une valeur comprise entre 0,1 mètre et 0,3 mètre, l'écart de temps entre le premier instant et le deuxième instant étant inférieur ou égal au quotient du seuil bas initial par une vitesse latérale sensiblement égale à deux mètres par seconde, l'écart de temps étant supérieur à une milliseconde.

Selon l'invention, la discontinuité initiale est en outre comparée à un seuil haut initial prédéterminé, un faux positif de discontinuité initiale étant détecté si la discontinuité initiale est supérieure au seuil bas initial et inférieure au seuil haut initial.

Selon un aspect de l'invention, le seuil haut initial est égal à une valeur comprise entre 1,7 mètre et 2,3 mètres.

Selon un aspect de l'invention, le référentiel comprend un axe des ordonnées sensiblement parallèle à une direction latérale du véhicule et un point d'origine localisé au niveau de la caméra du véhicule, les première distance et deuxième distance correspondent à l'ordonnée au point d'origine d'un point de la ligne de marquage respectivement au premier instant et au deuxième instant dans le temps.

Selon un aspect de l'invention, le référentiel comprend un axe des abscisses sensiblement parallèle à une direction longitudinale du véhicule, le procédé de détection de faux positifs comprend en outre les étapes suivantes :
- une troisième étape de détermination, à partir des données de modélisation de la ligne de marquage, d'une première ordonnée d'un point d'horizon de la ligne de marquage dont la première abscisse est une distance correspondant à la distance à parcourir par le véhicule dans une durée à l'horizon prédéfinie, au premier instant dans le temps,
- une quatrième étape de détermination, à partir des données de modélisation de la ligne de marquage, d'une deuxième ordonnée d'un point d'horizon de la ligne de marquage dont la deuxième abscisse est une distance correspondant à la distance à parcourir par le véhicule dans ladite durée à l'horizon prédéfinie, au deuxième instant dans le temps,
- une étape de calcul de discontinuité à l'horizon dans laquelle une discontinuité à l'horizon est calculée, la discontinuité à l'horizon étant égale à la valeur absolue de la différence entre la première ordonnée et la deuxième ordonnée, à laquelle est retranchée la discontinuité initiale,
- une étape de détection de faux positif de discontinuité à l'horizon, dans laquelle la discontinuité à l'horizon est comparée à un seuil d'horizon prédéterminé, un faux positif de discontinuité à l'horizon étant détecté si la discontinuité à l'horizon est supérieure au seuil d'horizon.

Selon un aspect de l'invention, la durée à l'horizon prédéfinie est une valeur comprise entre 0,9 seconde et 1,1 seconde, le seuil d'horizon est une valeur comprise entre 0,2 mètre et 1 mètre.

Selon un aspect de l'invention, les données de modélisation comprennent une distance de visibilité optimale, le procédé de détection de faux positifs comprenant en outre une étape de détection de faux positif de portée, dans laquelle la distance de visibilité optimale est comparée à un seuil de portée égal à la distance à parcourir par le véhicule dans une durée de portée prédéfinie, un faux positif de portée étant détecté si la distance de visibilité optimale est inférieure au seuil de portée.

Selon un aspect de l'invention, la durée de portée prédéfinie est une valeur comprise entre 0,8 seconde et 0,99 seconde.

Selon un aspect de l'invention, le procédé de détection de faux positifs comprend en outre une étape d'affichage d'une alerte visuelle à un utilisateur du véhicule si un faux positif parmi un faux positif de discontinuité initiale, un faux positif de discontinuité à l'horizon ou un faux positif de portée est détecté, pour prévenir l'utilisateur d'une perte temporaire de détection de la ligne de marquage par la caméra.

Selon un aspect de l'invention, les données de modélisation de la ligne de marquage sont de type polynômial de degré supérieur ou égal à trois.

L'invention porte également sur un produit programme d'ordinateur, selon la revendication 9, comprenant les instructions de programme mettant en oeuvre au moins une étape du procédé de détection de faux positifs, lorsque les instructions de programme sont exécutées par un ordinateur.

L'invention porte également sur un support lisible d'informations, selon la revendication 10, sur lequel est mémorisé le produit programme d'ordinateur.

D'autres avantages et caractéristiques de l'invention apparaîtront à la lecture de la description et des dessins.
[Fig 1] est un schéma représentant un véhicule équipé d'un dispositif de traitement d'image d'une caméra circulant sur une voie de circulation à un premier instant dans le temps.
[Fig 2] est un schéma représentant un véhicule équipé d'un dispositif de traitement d'image d'une caméra circulant sur une voie de circulation à un deuxième instant dans le temps.
[Fig 3] est un schéma représentant un mode de réalisation alternatif de la figure 1.
[Fig 4] est un schéma représentant un mode de réalisation alternatif de la figure 2.
[Fig 5] est un schéma représentant une variante de la figure 2.
[Fig 6] est une image de caméra.
[Fig 7] est un schéma représentant les étapes d'un procédé de détection de faux positifs d'un dispositif de traitement d'image d'une caméra, selon l'invention.
[Fig 8a] représente un écran d'affichage sur lequel sont représentées des lignes de marquage d'une voie de circulation du véhicule pour laquelle aucun faux positif n'a été détecté.
[Fig 8b] représente un écran d'affichage sur lequel sont représentées des lignes de marquage d'une voie de circulation du véhicule pour laquelle un faux positif a été détecté.

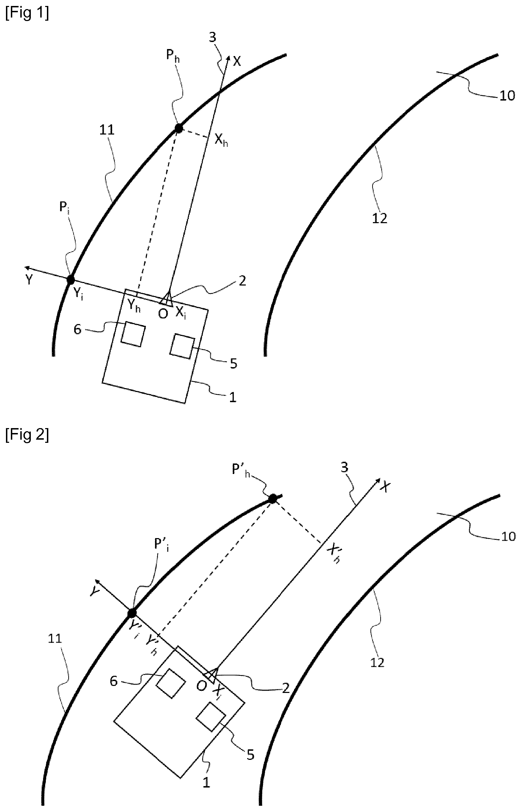

La figure 1 représente un véhicule 1, à un premier instant T1 dans le temps, circulant sur une voie de circulation 10 comportant deux lignes de marquage 11, 12 localisées de part et d'autre dudit véhicule 1.

Le véhicule 1 comprend une caméra 2 comportant un dispositif de traitement d'image apte à fournir des données de modélisation d'une ligne de marquage 11, 12.

Les données de modélisation permettent de modéliser la ligne de marquage 11, 12 dans un référentiel 3 fixe par rapport au véhicule 1.

Les données de modélisation permettent de modéliser une ligne de marquage 11, 12 sous la forme d'une courbe continue, que les repères au sol, par exemple des bandes réfléchissantes, soient présents de manière continue ou discontinue le long de la ligne de marquage 11, 12.

De préférence, les données de modélisation sont de type polynômial de degré supérieur ou égal à trois. Par exemple, le dispositif de traitement d'image est apte à fournir les coefficients du polynôme.

Le référentiel fixe 3 comprend un axe des ordonnées Y sensiblement parallèle à une direction latérale du véhicule 1 et un axe des abscisses X sensiblement parallèle à une direction longitudinale du véhicule, l'axe des abscisses X et l'axe des ordonnées Y se coupant en un point d'origine O.

La direction longitudinale du véhicule 1 est par exemple une droite passant par le centre d'essieux du véhicule 1, l'avant du véhicule et l'arrière du véhicule.

De préférence le référentiel 3 est un repère orthogonal.

La direction latérale du véhicule 1 est perpendiculaire à la direction longitudinale du véhicule 1, par exemple une droite passant par la portière avant gauche et par la portière avant droite.

Avantageusement, le point d'origine O est localisé au niveau de la caméra 2 du véhicule 1. La caméra 2 est une caméra frontale localisée à l'avant du véhicule 1.

La ligne de marquage 11 comporte un point initial Pi dont les coordonnées dans le repère 3 sont représentées par une abscisse et une ordonnée et peuvent être déterminées à partir des données de modélisation fournies par le dispositif de traitement d'image de la caméra 2.

Avantageusement, l'abscisse et l'ordonnée du point d'origine O sont égales à zéro.

Le véhicule 1 comprend un dispositif de détection de faux positifs 5 apte à déterminer l'ordonnée d'un point de la ligne de marquage 11, 12 à partir de son abscisse.

Dans un mode de réalisation préférentiel, l'abscisse Xi du point initial Pi est sensiblement égale à zéro. L'abscisse Xi est donc sensiblement confondue avec le point d'origine O. L'ordonnée du point initial Pi est une première distance Yi du véhicule 1 à la ligne de marquage 11 à un premier instant T1 dans le temps. La première distance Yi est l'ordonnée du point initial Pi au point d'origine O. La première distance Yi est déterminable à partir des données de modélisation de la ligne de marquage 11. Le dispositif de détection de faux positifs 5 est apte à déterminer la première distance Yi à partir des données de modélisation de la ligne de marquage 11 fournies par le dispositif de traitement d'image de la caméra 2.

La ligne de marquage 11 comporte également un point d'horizon Ph dont l'abscisse au premier instant T1 dans le temps est une première abscisse Xh correspondant à la distance à parcourir par le véhicule 1 dans une durée à l'horizon dTh prédéfinie.

Le véhicule 1 comprend un capteur de vitesse 6. Le dispositif de détection de faux positif 5 est apte à récupérer dudit capteur de vitesse 6, la vitesse du véhicule à un instant déterminé. A partir de la vitesse véhicule, le dispositif de détection de faux positif est apte à calculer la distance à parcourir par le véhicule 1 dans une durée à l'horizon dTh prédéfinie.

La durée à l'horizon dTh prédéfinie est de préférence comprise entre 0,9 seconde et 1,1 seconde, typiquement égale à 1 seconde.

Par exemple, pour une durée à l'horizon dTh égale à une seconde et une vitesse véhicule égale à 25 mètres par seconde, la première abscisse Xh est égale à 25 mètres.

Le dispositif de détection de faux positifs 5 est apte à déterminer l'ordonnée du point d'horizon Ph appelée première ordonnée Yh au premier instant T1, à partir de la première abscisse Xh précédemment calculée et des données de modélisation de la ligne de marquage 11 fournies par le dispositif de traitement d'image de la caméra 2.

La figure 2 diffère de la figure 1 en ce qu'elle représente le véhicule 1 circulant sur la voie de circulation 10 à un deuxième instant T2 dans le temps. Le premier instant T1 est antérieur au deuxième instant T2. Lorsque le véhicule 1 circule sur la voie de circulation 10, le véhicule parcourt une distance non nulle sur la voie de circulation 10 entre le premier instant T1 et le deuxième instant T2.

L'écart de temps DT, en valeur absolue, entre le premier instant T1 et le deuxième instant T2 est de préférence compris entre 1 milliseconde et 150 millisecondes.

Le référentiel 3 étant fixe par rapport au véhicule et le véhicule 1 ayant changé de position sur la voie de circulation 10, la ligne de marquage 11 est distante du véhicule 1 d'une deuxième distance Y'i, au deuxième instant T2. La deuxième distance Y'i du véhicule 1 est l'ordonnée d'un point initial P'i dont l'abscisse Xi est donc confondue avec le point d'origine O, comme sur la figure 1.

La ligne de marquage 11 comporte un nouveau point d'horizon P'h dont l'abscisse au deuxième instant T2 dans le temps est une deuxième abscisse X'h correspondant à la distance à parcourir par le véhicule 1 dans la durée à l'horizon dTh prédéfinie au deuxième instant T2.

La première abscisse Xh et la deuxième abscisse X'h ne sont pas nécessairement égales mais elles sont très proches. En effet, la durée à l'horizon dTh est une valeur fixe, mais la vitesse du véhicule 1 n'est pas nécessairement la même au premier instant T1 et au deuxième instant T2. Cependant, l'écart de temps DT, en valeur absolue, entre le premier instant T1 et le deuxième instant T2 étant inférieure à 150 millisecondes, l'écart entre la première abscisse Xh et la deuxième abscisse X'h est faible.

Par exemple si l'écart de vitesse du véhicule entre le premier instant T1 et le deuxième instant T2 est égal à 0,05 mètre par seconde, alors l'écart entre la première abscisse Xh et la deuxième abscisse X'h est égal à 0,05 mètre, pour une durée à l'horizon dTh égale à une seconde.

A partir de la vitesse véhicule au deuxième instant T2, le dispositif de détection de faux positif 5 est apte à calculer la distance à parcourir par le véhicule 1 dans une durée à l'horizon dTh prédéfinie, ce qui correspond à la deuxième abscisse X'h.

Le dispositif de détection de faux positifs 5 est apte à déterminer l'ordonnée du point d'horizon P'h appelée deuxième ordonnée Y'h au deuxième instant T2, à partir de la deuxième abscisse X'h précédemment calculée et des données de modélisation de la ligne de marquage 11 fournies par le dispositif de traitement d'image de la caméra 2.

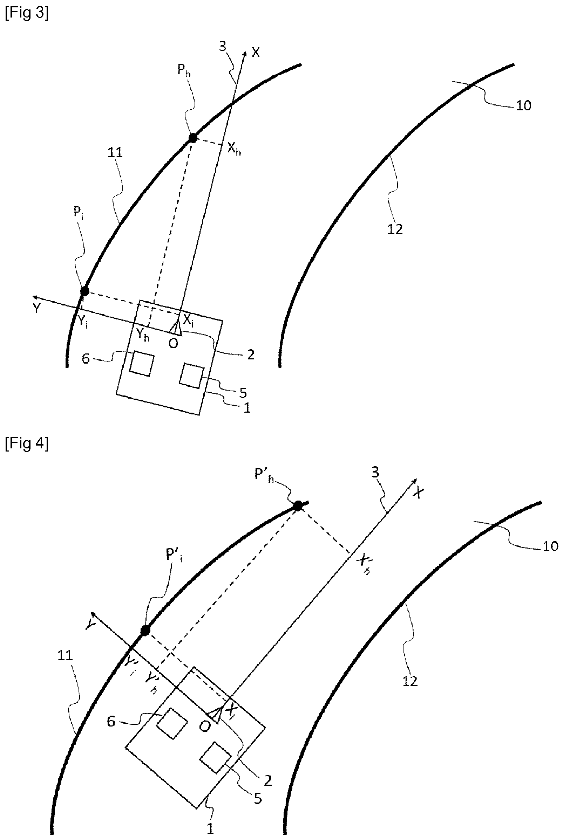

Les figures 3 et 4 représentent un mode de réalisation alternatif respectivement des figures 1 et 2.

La figure 3 diffère de la figure 1 en ce que l'abscisse Xi du point initial Pi n'est pas confondue avec le point d'origine O. L'abscisse Xi est à une distance prédéfinie du point d'origine O.

Comme sur la figure 1, la première distance Yi du véhicule 1 à la ligne de marquage 11 au premier instant T1 dans le temps est définie par l'ordonnée du point Pi.

Le dispositif de détection de faux positifs 5 est apte à déterminer la première distance Yi à partir de l'abscisse Xi qui est prédéterminée et connue, et des données de modélisation de la ligne de marquage 11 fournies par le dispositif de traitement d'image de la caméra 2.

La figure 4 diffère de la figure 2 en ce que l'abscisse Xi du point initial P'i n'est pas confondue avec le point d'origine O. L'abscisse Xi est la même distance prédéfinie du point d'origine O que sur la figure 3.

Comme sur la figure 2, la deuxième distance Y'i du véhicule 1 à la ligne de marquage 11 au deuxième instant T2 dans le temps est définie par l'ordonnée du point P'i.

Le dispositif de détection de faux positifs 5 est apte à déterminer la deuxième distance Y'i à partir de l'abscisse Xi qui est prédéterminée et connue et des données de modélisation de la ligne de marquage 11 fournies par le dispositif de traitement d'image de la caméra 2.

Comme représenté aux figures 3 et 4, il peut être intéressant de ne pas confondre le point d'origine O avec l'abscisse Xi dans le cas où la caméra 2 n'est pas une caméra frontale localisée à l'avant du véhicule.

Par exemple, la caméra 2 est localisée sur le toit du véhicule 2. Avantageusement, l'abscisse Xi est la distance entre le point d'origine O situé sur la caméra 2 et l'avant du véhicule 2.

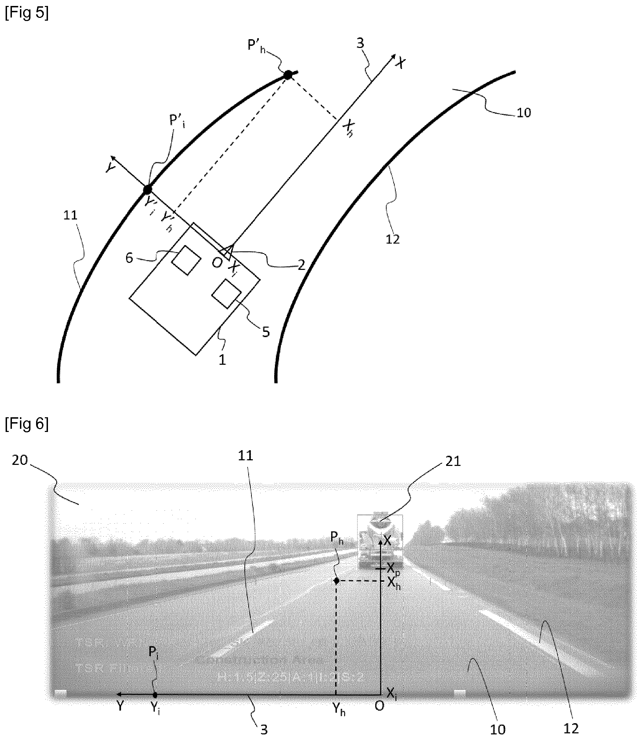

La figure 5 est une variante de la figure 2 qui peut également s'appliquer à la figure 4.

La figure 5 diffère de la figure 2 en ce que la deuxième ordonnée Y'h au deuxième instant T2 est déterminée par le dispositif de détection de faux positifs 5 à partir de la première abscisse Xh calculée au premier instant T1. Ceci présente l'avantage de déterminer la première ordonnée Yh et la deuxième ordonnée Y'h en la même première abscisse Xh.

La figure 6 est un exemple d'image 20 de caméra 6. Le repère 3 est superposé à l'image 20 de la caméra 6. Les lignes de marquage 11, 12 sont discontinues.

On retrouve le point d'origine Pi et le point d'horizon Ph, localisés sur la ligne de marquage 11, tel qu'illustré sur la figure 1.

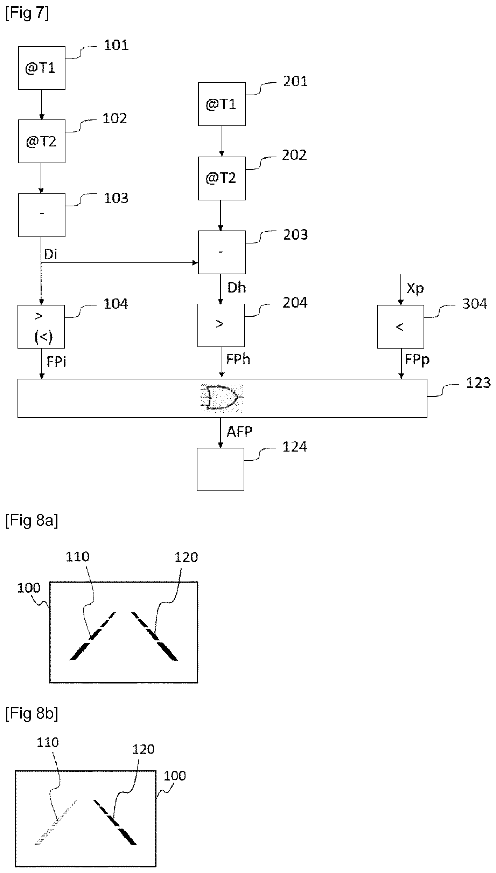

La figure 7 illustre un procédé de détection de faux positifs d'un dispositif de traitement d'image d'une caméra 2 embarquée sur un véhicule 1 tel que représenté aux figures 1 à 5.

Le procédé de détection de faux positifs permet de détecter des faux positifs parmi un faux positif de discontinuité initiale FPi, un faux positif de discontinuité à l'horizon FPh et un faux positif de portée FPp.

Pour détecter un faux positif de discontinuité initiale FPi, le procédé de détection de faux positif comprend les étapes suivantes :
- une première étape de détermination 101, à partir des données de modélisation de la ligne de marquage 11, de la première distance Yi du véhicule 1 à la ligne de marquage 11, au premier instant T1,
- une deuxième étape de détermination 102, à partir des données de modélisation de la ligne de marquage 11, de la deuxième distance Y'i du véhicule 1 à la ligne de marquage 11, au deuxième instant T2,
- une étape de calcul de discontinuité initiale 103 dans laquelle une discontinuité initiale Di est calculée, la discontinuité initiale Di étant égale à la valeur absolue de la différence entre la première distance Yi et la deuxième distance Y'i,
- une étape de détection de faux positif de discontinuité initiale 104, dans laquelle la discontinuité initiale Di est comparée à un seuil bas initial TBi prédéterminé, un faux positif de discontinuité initiale FPi étant détecté si la discontinuité initiale Di est supérieure au seuil bas initial TBi.

Selon l'invention, la discontinuité initiale Di est en outre comparée à un seuil haut initial THi prédéterminé, un faux positif de discontinuité initiale étant détecté si la discontinuité initiale Di est supérieure au seuil bas TBi et inférieure au seuil haut initial THi. Cela permet de ne pas détecter de faux positifs dans le cas d'un changement de voie de circulation par le véhicule 1.

Le seuil bas initial TBi est égal à une valeur comprise entre 0,1 mètre et 0,3 mètre, typiquement égal à 0,15 mètre.

Le seuil haut initial THi est égal à une valeur comprise entre 1,7 mètre et 2,3 mètres.

L'écart de temps DT, en valeur absolue, entre le premier instant T1 et le deuxième instant T2 est une valeur inférieure ou égale au quotient du seuil bas initial TBi par une vitesse latérale sensiblement égale à deux mètres par seconde.

En dessous d'une vitesse latérale de deux mètres par seconde, il est considéré que le déplacement latéral est involontaire. Au-dessus de cette vitesse, le déplacement latéral est considéré comme volontaire. Il est donc avantageux de choisir une vitesse de deux mètres par seconde car cela couvre les scénarios de déplacements latéraux involontaires.

L'écart de temps DT, en valeur absolue, entre le premier instant T1 et le deuxième instant T2 est supérieur à une milliseconde afin de donner au dispositif de détection de faux positifs 5 un temps suffisant pour exécuter les étapes du procédé de détection de faux positifs.

Pour un seuil bas initial TBi égal à 0,1 mètre, l'écart de temps DT, en valeur absolue, est donc une valeur comprise entre 1 milliseconde et 50 millisecondes, qui est le résultat du quotient de 0,1 par 2.

Pour un seuil bas initial TBi égal à 0,3 mètre, l'écart de temps DT, en valeur absolue, est donc une valeur comprise entre 1 milliseconde et 150 millisecondes, qui est le résultat du quotient de 0,3 par 2.

Pour détecter un faux positif de discontinuité à l'horizon FPh, le procédé de détection de faux positif comprend les étapes suivantes :
- une troisième étape de détermination 201, à partir des données de modélisation de la ligne de marquage 11, de la première ordonnée Yh du point d'horizon Ph de la ligne de marquage 11, au premier instant T1,
- une quatrième étape de détermination 202, à partir des données de modélisation de la ligne de marquage 11, de la deuxième ordonnée Y'h du point d'horizon P'h de la ligne de marquage 11 au deuxième instant T2,

- une étape de calcul de discontinuité à l'horizon 203 dans laquelle une discontinuité à l'horizon Dh est calculée, la discontinuité à l'horizon Dh étant égale à la valeur absolue de la différence entre la première ordonnée Yh et la deuxième ordonnée Yh', à laquelle est retranchée la discontinuité initiale Di,
- une étape de détection de faux positif de discontinuité à l'horizon 204, dans laquelle la discontinuité à l'horizon Dh est comparée à un seuil d'horizon THh prédéterminé, un faux positif de discontinuité à l'horizon FPh étant détecté si la discontinuité à l'horizon Dh est supérieure au seuil d'horizon THh.

La détermination des première ordonnée Yh du point d'horizon Ph et deuxième ordonnée Y'h du point d'horizon P'h est réalisée à partir de la première abscisse Xh ou de la deuxième abscisse X'h qui sont calculées comme explicité dans la description des figures 2, 4 et 5, et des données de modélisation de la ligne de marquage 11.

Le seuil d'horizon THh est compris entre 0,2 mètre et 1 mètre.

Les données de modélisation comprennent une distance de visibilité optimale Xp.

Un exemple de distance de visibilité optimale Xp est donné sur la figure 6. Un camion 21 circule sur la voie de circulation 10. Pour la caméra 6, le camion 21 est un obstacle sur la voie de circulation 10. Le camion 21 obstrue une partie des lignes de marquage 11, 12. Sur cet exemple, la distance de visibilité optimale Xp correspond sensiblement à la distance entre le camion 21 et la caméra 6.

Pour détecter un faux positif de portée FPp, le procédé de détection de faux positif comprend outre une étape de détection de faux positif de portée 304, dans laquelle la distance de visibilité optimale Xp est comparée à un seuil de portée THp égal à la distance à parcourir par le véhicule dans une durée de portée dTp prédéfinie, un faux positif de portée FPp étant détecté si la distance de visibilité optimale Xp est inférieure au seuil de portée THp.

Avantageusement, l'étape de détection de faux positif de portée 304 est réalisée au deuxième instant T1 et/ou au deuxième instant T2.

La durée de portée dTp prédéfinie est une valeur comprise entre 0,8 seconde et 0,99 seconde, typiquement égale à 0,95 seconde.

Par exemple, pour une durée portée dTp égale à 0,95 seconde et une vitesse véhicule égale à 25 mètres par seconde, le seuil de portée THp est égal à 23,75 mètres, qui est le résultat du produit de 0,95 par 25.

Il est bien entendu considéré comme équivalent de convertir la distance de visibilité optimale Xp en une durée que mettrait le véhicule 1 pour parcourir ladite distance de visibilité optimale Xp et de comparer cette dite durée au seuil de portée THp.

Un faux positif est détecté si l'un quelconque parmi un faux positif de discontinuité initiale FPi, un faux positif de discontinuité à l'horizon FPh ou un faux positif de portée FPp, est détecté.

Avantageusement, si un faux positif est détecté, le procédé de détection de faux positifs comprend en outre une étape d'affichage 124 d'une alerte visuelle à un utilisateur du véhicule 1, et ce, afin de prévenir l'utilisateur d'une perte temporaire de détection de la ligne de marquage 11 par la caméra 2.

Par exemple, le véhicule 1 comprend un écran d'affichage 100 sur lequel sont représentées les lignes de marquage 11, 12 de la voie de circulation 10. Si un faux positif est détecté sur la ligne de marquage 11 par le dispositif de détection de faux positifs 5, alors la représentation 110 de la ligne de marquage 11 sur l'écran d'affichage 100 est modifiée, par exemple par un changement de couleur. La représentation 120 de la ligne de marquage 12 n'est pas modifiée si un faux positif n'a pas été détecté sur la ligne de marquage 12.

Sur la figure 8a, aucun faux positif n'est détecté, la représentation 110, 120 des deux lignes de marquages 11, 12 est de couleur noire.

Sur la figure 8b, un faux positif est détecté sur la ligne de marquage 11. La représentation 110 de la ligne de marquage 11 est de couleur grise, la représentation 120 de la ligne de marquage 12 est inchangée.

Ce mode de réalisation d'alerte visuelle n'est pas limitatif. L'alerte visuelle peut être un pictogramme, un voyant...

Le dispositif de détection de faux positifs 5 comprend un programme comprenant les instructions de programme mettant en oeuvre les étapes du procédé de détection de faux positifs.

Le dispositif de détection de faux positifs 5 est connecté au capteur de vitesse 6 du véhicule 1 et au dispositif de traitement d'image de la caméra 2, de préférence par une liaison filaire. La connexion entre le capteur de vitesse 6 et le dispositif de détection de faux positifs 5 peut être directe ou indirecte. Par exemple, un calculateur intermédiaire peut être localisé entre le capteur de vitesse 6 et le dispositif de détection de faux positifs 5, le calculateur intermédiaire permettant de filtrer et de vérifier des données avant leur transmission au dispositif de détection de faux positifs 5.

Le protocole de communication entre le capteur de vitesse 6 et le dispositif de détection de faux positifs 5 est par exemple de type CAN.

Le protocole de communication entre le dispositif de traitement d'image de la caméra 2 et le dispositif de détection de faux positifs 5 est par exemple de type CAN.

Avantageusement, les instructions de programme mettant en œuvre les étapes du procédé de détection de faux positifs sont exécutées en boucle selon une période égale à l'écart de temps DT. Lors de la première exécution du programme, le premier instant T1 correspond à un instant de ladite première période, le deuxième instant T2 correspond à un instant de ladite deuxième période. Lors de la deuxième exécution du programme, le premier instant T1 correspond audit instant de ladite deuxième période, le deuxième instant T2 correspond à un instant de ladite troisième période, et ainsi de suite.

Les exemples et la description ci-dessus sont donnés en prenant comme exemple la ligne de marquage 11. Par analogie, les mêmes exemples et explications s'appliquent à la ligne de marquage 12.

## Revendications

1. Procédé de détection de faux positifs d'un dispositif de traitement d'image d'une caméra (2) embarquée sur un véhicule (1), ledit dispositif de traitement d'image étant apte à fournir des données de modélisation d'une ligne de marquage (11, 12) d'une voie de circulation (10) du véhicule (1) dans un référentiel (3) fixe par rapport au véhicule (1), le procédé de détection de faux positif comprenant les étapes suivantes :
- une première étape de détermination (101), à partir des données de modélisation de la ligne de marquage (11, 12), d'une première distance (Yi) du véhicule (1) à la ligne de marquage (11, 12), à un premier instant (T1) dans le temps,
- une deuxième étape de détermination (102), à partir des données de modélisation de la ligne de marquage (11, 12), d'une deuxième distance (Y'i) du véhicule (1) à la ligne de marquage (11, 12), à un deuxième instant (T2) dans le temps,
- une étape de calcul de discontinuité initiale (103) dans laquelle une discontinuité initiale (Di) est calculée, la discontinuité initiale (Di) étant égale à la valeur absolue de la différence entre la première distance (Yi) et la deuxième distance (Y'i),
- une étape de détection de faux positif de discontinuité initiale (104), dans laquelle la discontinuité initiale (Di) est comparée à un seuil bas initial (TBi) prédéterminé, un faux positif de discontinuité initiale (FPi) étant détecté si la discontinuité initiale (Di) est supérieure au seuil bas initial (TBi), le seuil bas initial (TBi) étant égal à une valeur comprise entre 0,1 mètre et 0,3 mètre, l'écart de temps (DT) entre le premier instant (T1) et le deuxième instant (T2) étant inférieur ou égal au quotient du seuil bas initial (TBi) par une vitesse latérale sensiblement égale à deux mètres par seconde, l'écart de temps (DT) étant supérieur à une milliseconde, la discontinuité initiale (Di) étant en outre comparée à un seuil haut initial (THi) prédéterminé, un faux positif de discontinuité initiale étant détecté si la discontinuité initiale (Di) est supérieure au seuil bas initial (TBi) et inférieure au seuil haut initial (THi).

2. Procédé de détection de faux positifs selon la revendication précédente, le seuil haut initial (THi) étant égal à une valeur comprise entre 1,7 mètre et 2,3 mètres.

3. Procédé de détection de faux positifs selon l'une quelconque des revendications précédentes, le référentiel (3) comprenant un axe des ordonnées (Y) sensiblement parallèle à une direction latérale du véhicule (1) et un point d'origine (O) localisé au niveau de la caméra (2) du véhicule (1), les première distance (Yi) et deuxième distance (Y'i) correspondant à l'ordonnée au point d'origine (O) d'un point (Pi, P'i) de la ligne de marquage (11, 12) respectivement au premier instant (T1) et au deuxième instant (T2) dans le temps.

4. Procédé de détection de faux positifs selon la revendication précédente, le référentiel (3) comprenant un axe des abscisses (X) sensiblement parallèle à une direction longitudinale du véhicule (1), le procédé de détection de faux positifs comprenant en outre les étapes suivantes :
- une troisième étape de détermination (201), à partir des données de modélisation de la ligne de marquage (11, 12), d'une première ordonnée (Yh) d'un point d'horizon (Ph) de la ligne de marquage (11, 12) dont la première abscisse (Xh) est une distance correspondant à la distance à parcourir par le véhicule (1) dans une durée à l'horizon (dTh) prédéfinie, au premier instant (T1) dans le temps,
- une quatrième étape de détermination (202), à partir des données de modélisation de la ligne de marquage (11, 12), d'une deuxième ordonnée (Y'h) d'un point d'horizon (P'h) de la ligne de marquage (11, 12) dont la deuxième abscisse (X'h) est une distance correspondant à la distance à parcourir par le véhicule (1) dans ladite durée à l'horizon (dTh) prédéfinie, au deuxième instant (T2) dans le temps,
- une étape de calcul de discontinuité à l'horizon (203) dans laquelle une discontinuité à l'horizon (Dh) est calculée, la discontinuité à l'horizon (Dh) étant égale à la valeur absolue de la différence entre la première ordonnée (Yh) et la deuxième ordonnée (Yh'), à laquelle est retranchée la discontinuité initiale (Di),
- une étape de détection de faux positif de discontinuité à l'horizon (204), dans laquelle la discontinuité à l'horizon (Dh) est comparée à un seuil d'horizon (THh) prédéterminé, un faux positif de discontinuité à l'horizon (FPh) étant détecté si la discontinuité à l'horizon (Dh) est supérieure au seuil d'horizon (THh).

5. Procédé de détection de faux positifs selon la revendication précédente, la durée à l'horizon (dTh) prédéfinie étant une valeur comprise entre 0,9 seconde et 1,1 seconde, le seuil d'horizon (THh) étant une valeur comprise entre 0,2 mètre et 1 mètre.

6. Procédé de détection de faux positifs selon l'une quelconque des revendications précédentes, les données de modélisation comprenant une distance de visibilité optimale (Xp), le procédé de détection de faux positifs comprenant en outre une étape de détection de faux positif de portée (304), dans laquelle la distance de visibilité optimale (Xp) est comparée à un seuil de portée (THp) égal à la distance à parcourir par le véhicule dans une durée de portée (dTp) prédéfinie, un faux positif de portée (FPp) étant détecté si la distance de visibilité optimale (Xp) est inférieure au seuil de portée (THp).

7. Procédé de détection de faux positifs selon la revendication précédente, la durée de portée (dTp) prédéfinie étant une valeur comprise entre 0,8 seconde et 0,99 seconde.

8. Procédé de détection de faux positifs selon l'une quelconque des revendications précédentes, comprenant en outre une étape d'affichage (124) d'une alerte visuelle à un utilisateur du véhicule (1) si un faux positif parmi un faux positif de discontinuité initiale (FPi), un faux positif de discontinuité à l'horizon (FPh) ou un faux positif de portée (FPp) est détecté, pour prévenir l'utilisateur d'une perte temporaire de détection de la ligne de marquage (11, 12) par la caméra (2).

9. Produit programme d'ordinateur comprenant les instructions de programme mettant en œuvre les étapes du procédé de détection de faux positifs selon l'une quelconque des revendications précédentes, lorsque les instructions de programme sont exécutées par un ordinateur.

10. Support lisible d'informations sur lequel est mémorisé le produit programme d'ordinateur selon la revendication précédente.

## Patentansprüche

1. Verfahren zur Erkennung von falschen Positiven einer Bildverarbeitungsvorrichtung einer Kamera (2), die in ein Fahrzeug (1) eingebaut ist, wobei die Bildverarbeitungsvorrichtung in der Lage ist, Modellierungsdaten einer Markierungslinie (11, 12) einer Fahrspur (10) des Fahrzeugs (1) in einem in Bezug auf das Fahrzeug (1) feststehenden Bezugssystem (3) bereitzustellen, wobei das Verfahren zur Erkennung von falschen Positiven die folgenden Schritte umfasst:
- einen ersten Schritt des Ermittelns (101), ausgehend von den Modellierungsdaten der Markierungslinie (11, 12), einer ersten Distanz (Yi) des Fahrzeugs (1) zu der Markierungslinie (11, 12) zu einem ersten Zeitpunkt (T1),
- einen zweiten Schritt des Ermittelns (102), ausgehend von den Modellierungsdaten der Markierungslinie (11, 12), einer zweiten Distanz (Y'i) des Fahrzeugs (1) zu der Markierungslinie (11, 12) zu einem zweiten Zeitpunkt (T2),
- einen Schritt des Berechnens einer anfänglichen Diskontinuität (103), bei dem eine anfängliche Diskontinuität (Di) berechnet wird, wobei die anfängliche Diskontinuität (Di) gleich dem Betrag der Differenz zwischen der ersten Distanz (Yi) und der zweiten Distanz (Y'i) ist,
- einen Schritt des Erkennens eines falschen Positiven einer anfänglichen Diskontinuität (104), bei dem die anfängliche Diskontinuität (Di) mit einem vorbestimmten anfänglichen unteren Schwellenwert (TBi) verglichen wird, wobei ein falscher Positiver einer anfänglichen Diskontinuität (FPi) erkannt wird, wenn die anfängliche Diskontinuität (Di) größer als der anfängliche untere Schwellenwert (TBi) ist, wobei der anfängliche untere Schwellenwert (TBi) gleich einem Wert zwischen 0,1 Meter und 0,3 Meter ist, wobei die Zeitabweichung (DT) zwischen dem ersten Zeitpunkt (T1) und dem zweiten Zeitpunkt (T2) kleiner oder gleich dem Quotienten aus dem anfänglichen unteren Schwellenwert (TBi) und einer Seitengeschwindigkeit von im Wesentlichen zwei Metern pro Sekunde ist, wobei die Zeitabweichung (DT) größer als eine Millisekunde ist, wobei die anfängliche Diskontinuität (Di) ferner mit einem vorbestimmten anfänglichen oberen Schwellenwert (THi) verglichen wird, wobei ein falscher Positiver einer anfänglichen Diskontinuität erkannt wird, wenn die anfängliche Diskontinuität (Di) größer als der anfängliche untere Schwellenwert (TBi) und kleiner als der anfängliche obere Schwellenwert (THi) ist.

2. Verfahren zur Erkennung von falschen Positiven nach dem vorhergehenden Anspruch, wobei der anfängliche obere Schwellenwert (THi) gleich einem Wert zwischen 1,7 Meter und 2,3 Meter ist.

3. Verfahren zur Erkennung von falschen Positiven nach einem der vorhergehenden Ansprüche, wobei das Bezugssystem (3) eine Ordinatenachse (Y), die im Wesentlichen parallel zu einer seitlichen Richtung des Fahrzeugs (1) ist, und einen Ursprungspunkt (O), der auf Höhe der Kamera (2) des Fahrzeugs (1) verortet ist, umfasst, wobei die erste Distanz (Yi) und die zweite Distanz (Y'i) der Ordinate am Ursprungspunkt (O) eines Punkts (Pi, P'i) der Markierungslinie (11, 12) zum ersten Zeitpunkt (T1) beziehungsweise zum zweiten Zeitpunkt (T2) entsprechen.

4. Verfahren zur Erkennung von falschen Positiven nach dem vorhergehenden Anspruch, wobei das Bezugssystem (3) eine Abszissenachse (X) umfasst, die im Wesentlichen parallel zu einer Längsrichtung des Fahrzeugs (1) ist, wobei das Verfahren zur Erkennung von falschen Positiven ferner die folgenden Schritte umfasst:
- einen dritten Schritt des Ermittelns (201), ausgehend von den Modellierungsdaten der ersten Markierungslinie (11, 12), einer ersten Ordinate (Yh) eines Horizontpunktes (Ph) der Markierungslinie (11, 12), dessen erste Abszisse (Xh) eine Distanz ist, die der von dem Fahrzeug (1) in einer vorgegebenen Dauer bis zum Horizont (dTh) zurückzulegenden Distanz zu dem ersten Zeitpunkt (T1) entspricht,
- einen vierten Schritt des Ermittelns (202), ausgehend von den Modellierungsdaten der ersten Markierungslinie (11, 12), einer zweiten Ordinate (Y'h) eines Horizontpunktes (P'h) der Markierungslinie (11, 12), dessen zweite Abszisse (X'h) eine Distanz ist, die der von dem Fahrzeug (1) in der vorgegebenen Dauer bis zum Horizont (dTh) zurückzulegenden Distanz zu dem zweiten Zeitpunkt (T2) entspricht,
- einen Schritt des Berechnens einer Diskontinuität am Horizont (203), bei dem eine Diskontinuität am Horizont (Dh) berechnet wird, wobei die Diskontinuität am Horizont (Dh) gleich dem Betrag der Differenz zwischen der ersten Ordinate (Yh) und der zweiten Ordinate (Yh') ist, von der die anfängliche Diskontinuität (Di) abgezogen wird,
- einen Schritt des Erkennens von falschen Positiven der Diskontinuität am Horizont (204), bei dem die Diskontinuität am Horizont (Dh) mit einem vorbestimmten Horizontschwellenwert (THh) verglichen wird, wobei ein falscher Positiver einer Diskontinuität am Horizont (FPh) erkannt wird, wenn die Diskontinuität am Horizont (Dh) größer als der Horizontschwellenwert (THh) ist.

5. Verfahren zur Erkennung von falschen Positiven nach dem vorhergehenden Anspruch, wobei die vorgegebene Dauer bis zum Horizont (dTh) ein Wert zwischen 0,9 Sekunden und 1,1 Sekunden ist, wobei der Horizontschwellenwert (THh) ein Wert zwischen 0,2 Meter und 1 Meter ist.

6. Verfahren zur Erkennung von falschen Positiven nach einem der vorhergehenden Ansprüche, wobei die Modellierungsdaten eine Distanz optimaler Sicht (Xp) umfassen, wobei das Verfahren zur Erkennung von falschen Positiven ferner einen Schritt des Erkennens eines falschen Positiven einer Reichweite (304) umfasst, bei dem die Distanz optimaler Sicht (Xp) mit einem Reichweitenschwellenwert (THp) gleich der von dem Fahrzeug in einer vorgegebenen Reichweitendauer (dTp) zurückzulegenden Distanz verglichen wird, wobei ein falscher Positiver einer Reichweite (FPp) erkannt wird, wenn die Distanz optimaler Sicht (Xp) kleiner als der Reichweitenschwellenwert (THp) ist.

7. Verfahren zur Erkennung von falschen Positiven nach dem vorhergehenden Anspruch, wobei die vorgegebene Reichweitendauer (dTp) ein Wert zwischen 0,8 Sekunden und 0,99 Sekunden ist.

8. Verfahren zur Erkennung von falschen Positiven nach einem der vorhergehenden Ansprüche, umfassend ferner einen Schritt des Anzeigens (124) einer visuellen Warnung für einen Benutzer des Fahrzeugs (1), wenn ein falscher Positiver unter einem falschen Positiven einer anfänglichen Diskontinuität (FPi), einem falschen Positiven einer Diskontinuität am Horizont (FPh) oder einem falschen Positiven einer Reichweite (FPp) erkannt wird, um den Benutzer vor einem vorübergehenden Ausfall der Erkennung der Markierungslinie (11, 12) durch die Kamera (2) zu warnen.

9. Computerprogrammprodukt, das Programmanweisungen umfasst, die bei der Ausführung der Programmanweisungen durch einen Computer die Schritte des Verfahrens zur Erkennung von falschen Positiven nach einem der vorhergehenden Ansprüche durchführen.

10. Lesbarer Datenträger, auf dem das Computerprogrammprodukt nach dem vorhergehenden Anspruch gespeichert ist.

## Claims

1. Method for detecting false positives of an image-processing device of a camera (2) located on-board a vehicle (1), said image-processing device being able to deliver modelling data of a marking line (11, 12) of a lane (10) of the vehicle (1) in a frame of reference (3) that is tied to the vehicle (1), the method for detecting false positives comprising the following steps:
- a first step (101) of determining, from the modelling data of the marking line (11, 12), a first distance (Yi) of the vehicle (1) to the marking line (11, 12), at a first instant (T1) in time,
- a second step (102) of determining, from the modelling data of the marking line (11, 12), a second distance (Y'i) of the vehicle (1) to the marking line (11, 12), at a second instant (T2) in time,
- an initial-discontinuity-computing step (103) in which an initial discontinuity (Di) is computed, the initial discontinuity (Di) being equal to the absolute value of the difference between the first distance (Yi) and the second distance (Y'i),
- a step (104) of detecting a false initial-discontinuity positive, in which step the initial discontinuity (Di) is compared to a preset low initial threshold (TBi), a false initial-discontinuity positive (FPi) being detected if the initial discontinuity (Di) is larger than the low initial threshold (TBi), the low initial threshold (TBi) being equal to a value comprised between 0.1 metres and 0.3 metres, the time difference (DT) between the first instant (T1) and the second instant (T2) being smaller than or equal to the quotient of the low initial threshold (TBi) divided by a lateral speed substantially equal to two metres per second, the time difference (DT) being larger than one millisecond, the initial discontinuity (Di) furthermore being compared to a preset high initial threshold (THi), a false initial-discontinuity positive being detected if the initial discontinuity (Di) is larger than the low initial threshold (TBi) and smaller than the high initial threshold (THi).

2. Method for detecting false positives according to the preceding claim, the high initial threshold (THi) being equal to a value comprised between 1.7 metres and 2.3 metres.

3. Method for detecting false positives according to any one of the preceding claims, the frame of reference (3) comprising an ordinate axis (Y) substantially parallel to a lateral direction of the vehicle (1) and an origin (O) located level with the camera (2) of the vehicle (1), the first distance (Yi) and the second distance (Y'i) corresponding to the ordinate at the origin (O) of a point (Pi, P'i) of the marking line (11, 12) at the first instant (T1) and at the second instant (T2) in time, respectively.

4. Method for detecting false positives according to the preceding claim, the frame of reference (3) comprising an abscissa axis (X) substantially parallel to a longitudinal direction of the vehicle (1), the method for detecting false positives furthermore comprising the following steps:
- a third step (201) of determining, from the modelling data of the marking line (11, 12), a first ordinate (Yh) of a horizon point (Ph) of the marking line (11, 12) the first abscissa (Xh) of which is a distance corresponding to the distance to be travelled by the vehicle (1) in a predefined horizon time (dTh), at the first instant (T1) in time,
- a fourth step (202) of determining, from the modelling data of the marking line (11, 12), a second ordinate (Y'h) of a horizon point (P'h) of the marking line (11, 12) the second abscissa (X'h) of which is a distance corresponding to the distance to be travelled by the vehicle (1) in said predefined horizon time (dTh), at the second instant (T2) in time,
- a horizon-discontinuity-computing step (203) in which a horizon discontinuity (Dh) is computed, the horizon discontinuity (Dh) being equal to the absolute value of the difference between the first ordinate (Yh) and the second ordinate (Yh'), minus the initial discontinuity (Di),
- a step (204) of detecting a false horizon-discontinuity positive, in which step the horizon discontinuity (Dh) is compared to a preset horizon threshold (THh), a false horizon-discontinuity positive (FPh) being detected if the horizon discontinuity (Dh) is larger than the horizon threshold (THh).

5. Method for detecting false positives according to the preceding claim, the predefined horizon time (dTh) being a value comprised between 0.9 seconds and 1.1 seconds, the horizon threshold (THh) being a value comprised between 0.2 metres and 1 metre.

6. Method for detecting false positives according to any one of the preceding claims, the modelling data comprising an optimal visibility distance (Xp), the method for detecting false positives furthermore comprising a step (304) of detecting a false range positive, in which step the optimal visibility distance (Xp) is compared to a range threshold (THp) equal to the distance to be travelled by the vehicle in a predefined range time (dTp), a false range positive (FPp) being detected if the optimal visibility distance (Xp) is smaller than the range threshold (THp).

7. Method for detecting false positives according to the preceding claim, the predefined range time (dTp) being a value comprised between 0.8 seconds and 0.99 seconds.

8. Method for detecting false positives according to any one of the preceding claims, furthermore comprising a step (124) of displaying a visual warning to a user of the vehicle (1) if a false positive among a false initial-discontinuity positive (FPi), a false horizon-discontinuity positive (FPh) and a false range positive (FPp) is detected, in order to warn the user of a temporary loss of detection of the marking line (11, 12) by the camera (2).

9. Computer-program product comprising program instructions that implement the steps of the method for detecting false positives according to any one of the preceding claims, when the program instructions are executed by a computer.

10. Readable data medium on which is stored the computer-program product according to the preceding claim.
